# EUROPEAN PATENT SPECIFICATION

(11) **EP 1 520 744 B1**
(45) Date of publication and mention of the grant of the patent: **05.07.2006**
(21) Application number: 04022157.4
(22) Date of filing: 17.09.2004
(51) Int. Cl.: B60K 15/03, B60K 15/04, G01F 23/74, F16K 31/42

(54) **Solenoid valve for controlling filling of a motor vehicle tank with LPG and filling system comprising such a valve**
Servoventil zum Betanken eines Fahrzeugs mit LPG und Betankungssystem mit einem derartigen Ventil
Soupape pour faire le plein avec LPG comme carburant et système comprenant une telle soupape

(30) Priority: 30.09.2003 IT TO20030761
(43) Date of publication of application: 06.04.2005
(73) Proprietor: C.R.F. Società Consortile per Azioni, 10043 Orbassano (TO) (IT)
(72) Inventor: Ricco, Mario, 10043 Orbassano (Torino) (IT); De Matthaeis, Sisto Luigi, 10043 Orbassano (Torino) (IT); Satriano, Annunziata Anna, 10043 Orbassano (Torino) (IT); Amorese, Claudio, 10043 Orbassano (Torino) (IT)
(74) Representative: Notaro, Giancarlo

(56) References cited:
- DE-A- 10 020 000
- DE-A- 10 248 228
- US-A- 3 446 474
- US-A- 4 688 587
- US-A- 4 796 662
- US-A- 5 197 710
- US-B1- 6 571 626

## Description

The present invention relates to a valve for controlling filling of a motor-vehicle tank with LPG, as well to a system comprising this valve. The system of the invention is of the type comprising a tank for LPG, having: an inlet mouth for introduction of LPG; a the above-mentioned valve that controls communication through said inlet mouth; sensor means for detecting the level of LPG in the tank; and means for controlling closing of said valve when the sensor means signal that a pre-set maximum level of LPG in the tank has been reached. A system for controlling filling of a motor-vehicle tank is known from US-A-4 688 587.

In the known embodiments, the aforesaid means that cause closing of the valve when the pre-set maximum level is reached consist of a mechanical transmission that connects a floating body forming part of the sensor device for detecting fuel level to the open/close element of the valve that controls communication through the inlet mouth for filling the tank.

The system described above is provided because the standards currently in force, for reasons of safety, impose the requirement that total filling of the tank should be prevented. More precisely, current standards require that it should not be possible for the tank to be filled beyond 80% of its capacity.

The known solution described above does not, however, guarantee that the aforesaid result will be obtained in an efficient and reliable way. Experience has in fact shown that the known device is unable to prevent completely overstepping of the pre-set maximum level of filling whenever the user insists on introducing LPG even after activation of the closing valve in so far as the mechanism can be forced to a certain extent, with the additional drawback that it is subject to failure after it has been used in this incorrect way for a number of times.

US-A-4 796 662 discloses a solenoid valve having a main open/close element which is normally kept in a closing position by a spring and an auxiliary open/close element as well as a solenoid for displacing the auxiliary open/close element so as to control opening and closing of the main element.

The purpose of the present invention is to overcome the aforesaid drawbacks by providing a relatively simple and reliable system that will guarantee the impossibility of filling the tank beyond the pre-set maximum limit.

With a view to achieving the above purpose, the subject of the present invention is a valve according to claim 1 and a system comprising this valve and further characterized by the features of claim 3.

Thanks to the characteristics referred to above, the solenoid of the solenoid valve according to the invention does not directly control the main open/close element that prevents introduction of fuel into the tank. Said main open/close element is in fact servo-actuated by controlling the position of said auxiliary open/close element associated to said pilot hole. In this way, the spring that is associated to the solenoid for recalling the mobile core of the solenoid towards its resting position can have a relatively low load, since it does not have to be able to overcome the pressure at which the LPG is fed into the tank. Consequently, also the force of attraction that must be generated by the solenoid is relatively low, with consequent saving of energy.

With the system according to the invention, before proceeding to filling the tank, the user operates a control member (typically a push-button, lever or the like) provided on the dashboard of the motor vehicle for selecting the mode of filling of the tank. By so doing, the user activates said electrical signal, indicating the intention to proceed with filling. The stand-alone circuit for controlling the system consequently excites the solenoid of the valve, which controls communication through the filler mouth in order to control opening thereof. At the same time, the sensor means for detecting the level of LPG in the tank are designed to emit an electrical signal when said pre-set maximum level is reached. When the control circuit of the system receives said signal, it de-excites the solenoid of the valve, which consequently returns to closing so that filling is interrupted. The system can also be provided with means for signalling that said condition has been reached, said means being provided on the dashboard of the motor vehicle.

In a preferred embodiment, the sensor means for detecting that the pre-set maximum level of LPG in the tank has been reached consist of at least one magnetically actuated electrical sensor, such as a reed relay provided on a supporting structure, which is fixed with respect to the structure of the tank and co-operates with one or more permanent magnets carried by a floating body, which is guided vertically with respect to said fixed structure. Preferably, said sensor means can be integrated in the sensor device for detecting the fuel level that has already formed the subject of the preceding Italian patent application No. TO2003A000097 in the name of the present applicant, which is still secret at the date of presentation of the present Italian patent application. In said level-sensing device, which enables the driver to receive a signal indicating the level of LPG in the tank, there is provided a supporting column, which is fixed with respect to the structure of the tank, inside the latter, bearing an aligned series of reed relays that co-operate with one or more permanent magnets carried by a ring-shaped floating body guided vertically about said supporting column. According to the present invention, at least one reed relay set at the top end of the series of relays can be designed to provide signalling of the fact that the pre-set maximum level of filling has been reached.

Further characteristics and advantages of the invention will emerge from the ensuing description, with reference to the annexed drawings, which are provided purely by way of non-limiting example and in which:
- Figure 1 is a schematic view of a system for controlling filling of a tank with LPG according to the invention;
- Figure 2 is a block diagram that illustrates the operating logic of the system;
- Figure 3 illustrates a block diagram of the system, including the stand-alone control circuit;
- Figure 4 illustrates a diagram of an example of embodiment of the control circuit; and
- Figure 5 is a cross-sectional view, at an enlarged scale, of a preferred embodiment of the solenoid valve forming part of the system according to the invention.

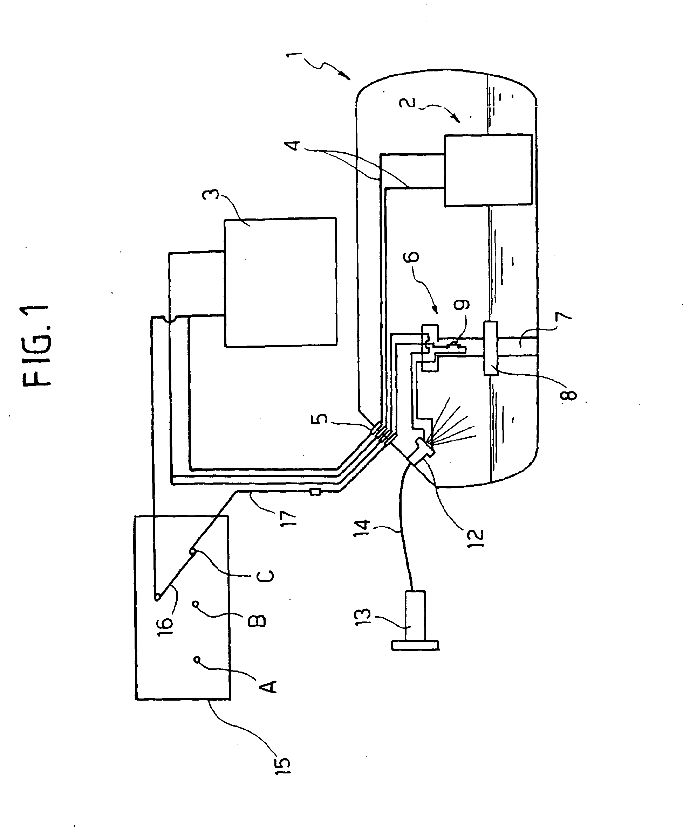

In Figure 1, the reference number 1 designates, as a whole, a tank for LPG for motor vehicles. According to a technique in itself known, set inside the tank 1 is an assembly 2 including a pump for the supply of LPG from the tank to the engine of the motor vehicle, as well as the corresponding electric actuating motor. The assembly 2 is connected electrically to the battery 3 on board the motor vehicle by means of lines 4 passing through a cable lead-in system 5 mounted on a closing plate of the tank. The constructional details of the tank, of the motor-pump assembly, and of the corresponding cable-lead-in device are not illustrated herein, both because they can be made in any known way and because, as they are, they do not fall within the scope of the present invention. On the other hand, the elimination of said details from the drawings renders the latter more readily and easily understandable.

Once again according to a technique in itself known, provided inside the tank 2 is a device 6 for signalling the level of LPG inside the tank. For the purposes of the present invention, said device can be of any type. However, there is preferred the use of a device of the type that has formed the subject of the preceding Italian patent application No. TO2003A000097 in the name of the present applicant (at the moment still secret). According to said preceding proposal, the device 6 comprises a vertical set of reed relays pre-arranged on a supporting column 7, which is fixed inside the tank. Said relays are activated in succession, during the variation in the level of LPG, by one or more permanent magnets associated to a floating member 8 in the form of an annular body, which is mounted around the column 7 and is thus guided vertically on it. Once again, it is to be emphasized that the device 6 for detection of the level of LPG in the tank could, however, be of any other alternative type. What is important, for the purposes of the present invention, is that there should be provided a sensor (even independent of the main level sensor) which is able to detect that a pre-set maximum level of LPG in the tank has been reached, typically corresponding to 80% of the maximum capacity of the tank. In the case of use of a sensor device 6 of the type mentioned, which has formed the subject of the preceding patent application in the name of the present applicant, the sensor for detecting that the pre-set maximum level has been reached may consist of at least one reed relay set at the top end of the series of relays mounted on the supporting column 7. The contact of the latter reed relay will be closed by the permanent magnet associated to the floating body 8 when the latter reaches a position with respect to the column 7 corresponding to the condition of maximum filling of the tank. Said reed relay, which is designed to cause interruption of LPG supply when the filling-limit condition is reached, is designated by the reference number 9 in Figure 1.

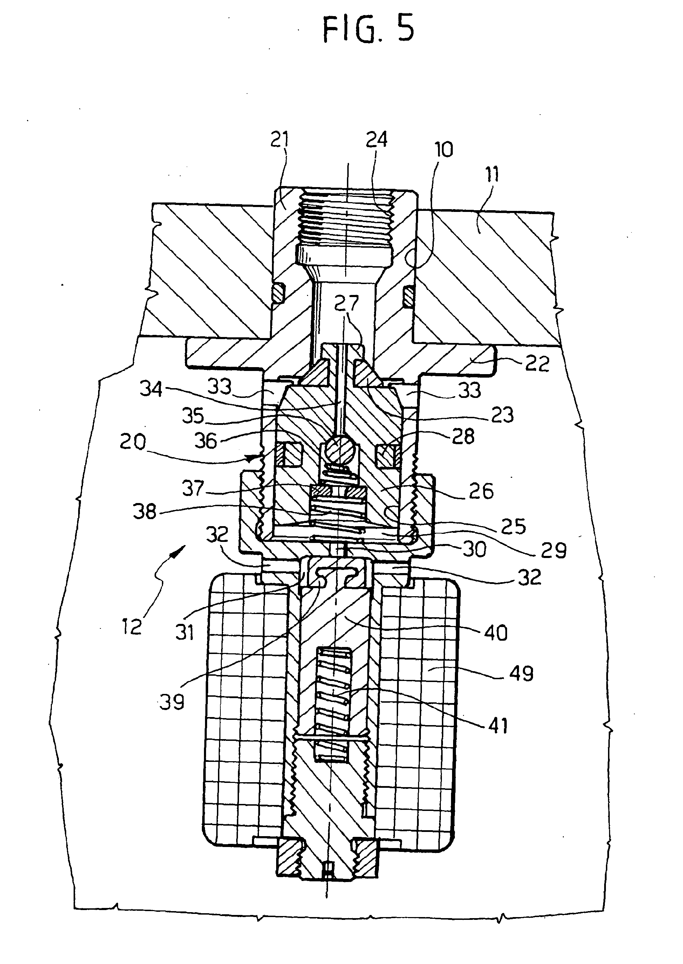

Once again according to the invention, set at the inlet mouth provided on the tank 1 for supply of LPG (typically an opening 10 - see Figure 5 - made in the closing plate 11 of the tank on which the cable lead-in system 5 is located) is a solenoid valve 12, which controls communication through said inlet mouth. The structure and operation of said solenoid valve will be described in what follows. Figure 1 also illustrates the filler 13 for supply of LPG, provided on the bodywork of the motor vehicle and accessible from outside, as well as the piping 14 that connects the filler 13 to the solenoid valve 12 that controls introduction of LPG inside the tank.

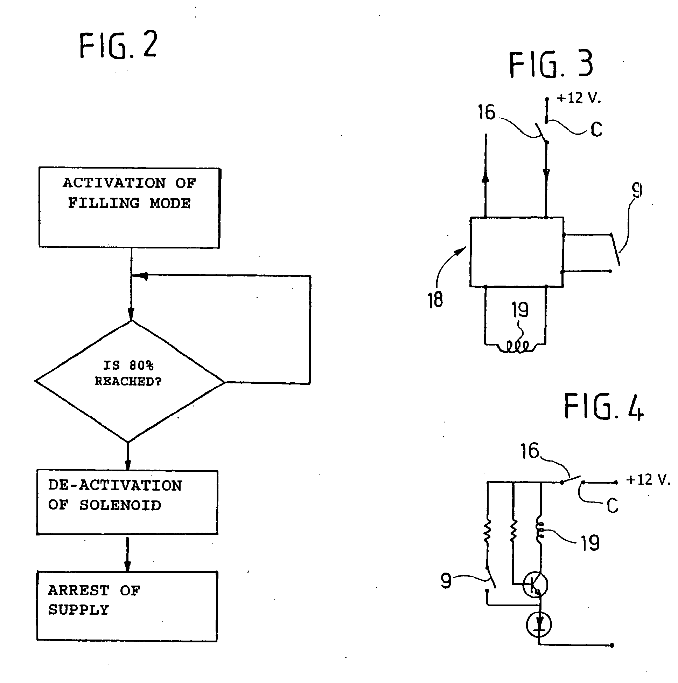

Figure 1 also illustrates schematically a control panel 15 provided on the dashboard of the motor vehicle. The panel 15 includes a selector member 16 having a position A corresponding to operation with petrol supply, a position B corresponding to operation with LPG supply, and a position C, corresponding to the selection of the mode of supply of LPG. The selector member 16 consequently constitutes a control member, by means of which the user can generate an electrical signal indicating the intention to proceed with supply of the tank 1 with LPG. Said electrical signal is fed along a line 17, which forms part, together with the sensor 9 and the solenoid of the solenoid valve 12, of a stand-alone control circuit illustrated in Figures 3 and 4. Said circuit, albeit supplied by the battery 3 on board the motor vehicle, is completely separate from the main vehicle circuit, so that it is active even when the engine is turned off.

The stand-alone control circuit is designated by the reference number 18 in Figure 3. Said circuit is able to receive both the signal indicating the intention to proceed with filling, which is activated by the control member 16' and the signal indicating that the pre-set maximum level of LPG in the tank has been reached, which is activated by the sensor 9. The control circuit 18 consequently controls the solenoid 19 of the solenoid valve (Figure 3). More precisely, when the control member 16 is brought into the position C, generating the signal indicating the intention to proceed with filling, the circuit 18 excites the solenoid 19 that consequently controls opening of the valve 12, (which is normally in the closing condition). Once the valve 12 is opened, supply of LPG into the tank is possible. However, said condition is maintained only provided that the level of LPG in the tank does not exceed the pre-set maximum level. When said maximum level is reached, the sensor 9 closes, and the control circuit 18 consequently causes de-excitation of the solenoid 19.

Figure 4 illustrates, by way of example, a possible circuit diagram that enables the above result to be obtained.

The operating logic illustrated above is also represented in the block diagram of Figure 2. In said diagram, the first block illustrates activation of the filling mode, obtained by displacing the control member 16 into the position of selection C. Following upon said activation, the circuit checks, in the second block, whether the pre-set maximum level, corresponding to 80% of the tank capacity, has been reached. Until said maximum level is reached, filling continues. When, instead, said limit is reached, the circuit causes deactivation of the solenoid of the solenoid valve 12, with consequent arrest of supply.

Figure 5 illustrates, as already indicated, a preferred embodiment of the solenoid valve 12. In said embodiment, the valve comprises a valve body 20 having a tubular connection 21 that is inserted in a fluid-tight way within an opening 10 of the plate 11 for closing the tank. The body 20 moreover has a flange 22 provided with holes for engagement of screws for fixing the valve to the plate 11.

The valve 12 comprises a main open/close element 23 consisting of a conical body made of elastomeric material co-operating with an annular valve seat defined by one end of the axial passage 24 of the tubular connection 21. The axial passage 24 gives out into an enlarged cylindrical chamber 25, in which there is slidably mounted a piston 26, which carries, at one of its ends, the main open/close element 23. Said open/close element has a ring-shaped body fitted around an axial protuberance 27 of the piston 26. The piston 26 is slidably mounted in a fluid-tight way, with the aid of an annular gasket 28 mounted in one of its external circumferential grooves, inside the enlarged cylindrical chamber 25. On account of the different transverse dimensions of the axial passage 24 and of the cavity 25, the piston 26 has differentiated end surfaces. The bottom end surface (as viewed in Figure 5) faces a chamber 29, which is able to communicate, via a pilot hole 30, with a chamber 31, which in turn communicates with the cavity of the tank via holes 32 made in the valve body 20. Said valve body moreover has radial passages 33 for setting the axial passage 24 in communication with the cavity of the tank in the condition of opening of the main open/close element 23.

The piston 26 is also traversed by an axial passage 34, which is able to set the two chambers facing the opposite ends of the piston in communication via a non-return valve consisting of a ball 35 pushed by a spring 36. The spring 36 will rest on a disk 37, which is received in the axial passage of the piston 26 and is pressed by a further helical spring 38.

The pilot hole 30 is controlled by an auxiliary open/close element 39, which is associated to the mobile core 40 of an electromagnet, which includes the solenoid 19 (illustrated in the diagrams of Figures 3 and 4) and a spring 41, which tends to press the auxiliary open/close element 39 into the condition for closing of the pilot hole 30.

Operation of the valve described above is emerges from what follows.

Assuming that the solenoid 19 is de-excited, the auxiliary open/close element 39 is in its condition for closing the pilot hole 30 and the main open/close element 23 is in turn in its position for closing communication between the axial passage 24 and the holes 33 for supply of LPG into the tank. In said condition, whenever LPG is introduced with a certain pressure through the axial passage 24, the liquid will flow through the axial passage 34 of the piston 26, opening the non-return valve consisting of the ball 35 and flowing into the chamber 29 under the piston 26. Once said chamber is filled, the piston 26 will be subject at both of its ends to the same filling pressure. However, since the end surface of the piston 26 facing the chamber 29 has an extension greater than the end surface of the piston facing the axial passage 24, the piston will remain closed. As may be noted, in said condition, the spring 38 does not have any significant function in maintaining the main open/close element 23 in its closing position, notwithstanding the pressure exerted thereon by the liquid supplied, in so far as it is the opposite and differentiated sections of the piston that guarantee said condition. Much less does the spring 41, associated to the solenoid 19, need to ensure the condition of closing of the main open/close element 23.

Starting from said condition, the open/close element 23 can be servo-actuated in opening by excitation of the solenoid 19. Said excitation in fact causes displacement of the mobile core 40 downwards (as viewed in Figure 5) and consequently displacement of the auxiliary open/close element 39 into its position for opening the pilot hole 30. In said condition, the chamber 29 is set in communication, via the holes 32, with the environment of the tank so that the piston 26 is displaced from its closing position. As soon as the piston is displaced, the entire top surface of the piston is subjected to the pressure of the fluid supplied, so that the main open/close element 23 is displaced decidedly into the position of complete opening, in which it enables the LPG arriving through the axial passage 24 to flow into the tank through the radial holes 33 of the valve body 20. As soon as the solenoid 19 is de-excited, the auxiliary open/close element 39 returns to its closing condition, so that the pressure in the chamber 29 can rise again, which brings the piston 26 back again into its closing position, also thanks to the contribution of the spring 38. Once the closing condition has been reached, the differentiated sections at the two ends of the piston guarantee maintenance of said condition, for the same reasons as those mentioned above.

As may be noted, thanks to the particular arrangement described above, the valve according to the invention uses the solenoid only for controlling an auxiliary open/close element, which in turn controls a pilot hole 30. Consequently, the spring 41 of the solenoid can have a relatively low load in so far as it is not necessary to overcome the force due to the pressure of supply of LPG. Since the load of the spring 41 is low, also the force of attraction that must be generated by the solenoid 19 is low, which enables a considerable saving in terms of energy.

Of course, without prejudice to the principle of the invention, the details of construction and the embodiments may vary widely with respect to what is described and illustrated herein purely by way of example, without thereby departing from the scope of the present invention as defined by the claims.

## Claims

1. A solenoid valve for controlling communication through the inlet mouth for filling a tank (1) with LPG, comprising: a main open/close element (23), which is normally kept in a closing position by a piston (26) with differentiated opposite sections, both of which are substantially subjected to the pressure of supply of the LPG; an auxiliary open/close element (39), which is normally kept, by elastic means (41), in a closing position of a pilot hole (30); and a solenoid (19) for displacing the auxiliary open/close element (39) into an opening position of said pilot hole (30), into which there is discharged a chamber facing said piston (26) to enable displacement of the piston towards the opening position of said main open/close element (23).

2. The solenoid valve according to Claim 1 **characterized in that** said piston (26) is traversed by an axial passage (34), in which there is set a non-return valve (35), which prevents flow of LPG in the direction of the valve inlet.

3. A system for controlling filling of a motor-vehicle tank with LPG, comprising a tank for LPG (1), having an inlet mouth for introduction of LPG;
- **characterized in that** said system comprises a valve (12) according to claim 1 that controls communication through said inlet mouth; said system further comprising:
- sensor means (9) for detecting the level of LPG in the tank; and
- means for controlling closing of said valve (12) when the sensor means (9) signal that a pre-set maximum level of LPG in the tank has been reached, and
- wherein:
- said valve (12) is a normally closed valve that can be driven in opening by excitation of said solenoid (19);
- said sensor means (9) are pre-arranged to emit a first electrical signal when said pre-set maximum level 1 of LPG in the tank is reached;
- the system further comprises:
- a control member (16), which can be operated manually, for generating a second electrical signal indicating the intention to proceed with filling the tank (1); and
- a control circuit (18), which is independent of the circuit on board the motor vehicle (i.e., a stand-alone circuit) so as to be active even when the vehicle engine is turned off, said stand-alone circuit being pre-arranged for receiving said first signal and said second signal, and connected to the solenoid (19) of said valve (12), so as to:
- excite the solenoid (19) of the valve, in order to control opening thereof, when said circuit receives said second signal indicating activation of the modality of supply and until said first signal indicating that the pre-set maximum level of LPG in the tank has been reached is received, and
- de-excite said solenoid (19) to control closing of the valve (12), when said first signal indicating that the pre-set maximum level of LPG in the tank has been reached is received.

4. The system according to Claim 3, **characterized in that** said sensor means consist of a magnetically activated electrical sensor, arranged on a supporting structure (7), which is fixed with respect to the structure of the tank and co-operates with at least one permanent magnet carried by a floating body (8) guided with respect to said fixed structure (7).

5. The system according to Claim 4, **characterized in that** said sensor is a reed relay (9), set at the end of a series of reed relays pre-arranged on one and the same supporting structure (7) and co-operating with said permanent magnet of said floating body (8) to provide signalling of the level of LPG in the tank.

6. The system according to Claim 3, **characterized in that** said manually operated control member (16) is a selector member, provided on the dashboard on board the motor vehicle, which enables selection of the mode for filling the tank with LPG.

7. The system according to Claim 3, **characterized in that** said control circuit is integrated in the structure of said valve (12).

## Patentansprüche

1. Magnetventil zum Steuern der Strömungsverbindung durch die Einlassöffnung zum Befüllen eines Tanks (1) mit LPG bzw. Flüssiggas, aufweisend: ein Haupt-Öffnungs-/Schließelement (23), welches normalerweise durch einen Kolben (26) in einer geschlossenen Position gehalten wird, mit abgegrenzten, gegenüberliegenden Abschnitten, welche beide im Wesentlichen dem Zuführdruck des LPG ausgesetzt sind; ein Hilfs-Öffnungs-/Schließelement (39), welches normalerweise durch elastische Mittel (41) in einer geschlossenen Position eines Führungslochs (30) gehalten wird; und einen Magneten (19) zum Verstellen des Hilfs-Öffnungs-/Schließelements (39) in eine Öffnungsposition des Führungslochs (30), in welches eine Kammer mündet, welche dem Kolben (26) gegenüberliegt, um eine Verstellung des Kolbens in Richtung zu der Öffnungsposition des Haupt-Öffnungs-/Schließelements (23) zu erlauben.

2. Magnetventil nach Anspruch 1, **dadurch gekennzeichnet, dass** der Kolben (26) von einem axialen Durchgang (34) durchquert wird, in welchen ein Rückschlagventil (35) gesetzt ist, welches ein Strömen von LPG in die Richtung des Ventileinlasses verhindert.

3. System zum Steuern des Befüllens eines Kraftfahrzeugtanks mit LPG bzw. Flüssiggas, aufweisend einen Tank für LPG (1), der eine Einlassöffnung zum Einbringen von LPG aufweist;
- **dadurch gekennzeichnet, dass** das System ein Ventil (12) nach Anspruch 1 aufweist, welches die Strömungsverbindung durch die Einlassöffnung steuert; wobei das System weiterhin aufweist:
- Sensormittel (9) zum Erfassen des Füllstandes von LPG in dem Tank; und
- Mittel zum Steuern des Schließens des Ventils (12), wenn die Sensormittel (9) signalisieren, dass ein voreingestellter, maximaler Füllstand von LPG in dem Tank erreicht wurde, und
- wobei:
- das Ventil (12) ein normalerweise geschlossenes Ventil ist, das durch Erregung des Magneten (19) in Öffnungsstellung gebracht werden kann;
- die Sensormittel (9) vorangeordnet sind, um ein erstes elektrisches Signal auszusenden, wenn der voreingestellte, maximale Füllstand von LPG in dem Tank erreicht wird;
- das System weiterhin aufweist:
- ein Steuerelement (16), welches manuell betätigt werden kann, zum Erzeugen eines zweiten elektrischen Signals, welches die Absicht angibt, die Befüllung des Tanks (1) vorzunehmen; und
- einen Steuerschaltkreis (18), welcher unabhängig von dem sich an Bord des Kraftfahrzeugs befindenden Schaltkreis ist (d.h. ein unabhängiger Schaltkreis), um aktiv zu sein, auch wenn der Fahrzeugmotor ausgeschaltet ist, wobei der unabhängige Schaltkreis vorangeordnet ist, um das erste Signal und das zweite Signal zu empfangen, und an dem Magneten (19) des Ventils (12) angeschlossen ist, um:
- den Magneten (19) des Ventils zu erregen, um die Öffnung von diesem zu steuern, wenn der Schaltkreis das zweite Signal empfängt, das eine Aktivierung des Zuführmodus angibt, und bis das erste Signal, welches angibt, dass der voreingestellte, maximale Füllstand von LPG in dem Tank erreicht worden ist, empfangen wird, und
- Beenden des Erregens des Magneten (19) zum Steuern des Schließens des Ventils (12), wenn das erste Signal, welches angibt, dass der voreingestellte, maximale Füllstand von LPG in dem Tank erreicht worden ist, empfangen wird.

4. System nach Anspruch 3, **dadurch gekennzeichnet, dass** die Sensormittel aus einem magnetisch aktivierten elektrischen Sensor bestehen, der auf einer Trägerstruktur (7) angeordnet ist, welche im Verhältnis zu der Struktur des Tanks befestigt ist und mit mindestens einem permanenten Magneten zusammenwirkt, der durch einen schwimmenden Körper (8) getragen wird, der im Verhältnis zu der festen Struktur (7) geführt wird.

5. System nach Anspruch 4, **dadurch gekennzeichnet, dass** der Sensor ein Reed-Relais (9) ist, das an das Ende einer Reihe von Reed-Relais gesetzt ist, die an ein und derselben Trägerstruktur (7) vorangeordnet sind und mit dem permanenten Magneten des schwimmenden Körpers (8) zusammenwirken, um ein Signalisieren des Füllstands von LPG in dem Tank bereitzustellen.

6. System nach Anspruch 3, **dadurch gekennzeichnet, dass** das manuell betätigte Steuerelement (16) ein Auswahlelement ist, das am Armaturenbrett an Bord des Kraftfahrzeugs vorgesehen ist, welches die Auswahl des Modus zum Befüllen des Tanks mit LPG ermöglicht.

7. System nach Anspruch 3, **dadurch gekennzeichnet, dass** der Steuerschaltkreis in der Struktur des Ventils (12) integriert ist.

## Revendications

1. Soupape électromagnétique pour commander la communication au moyen de l'embouchure d'entrée pour le remplissage d'un réservoir (1) avec du GPL, comprenant : un élément principal d'ouverture/fermeture (23) qui est normalement maintenu dans une position fermée par un piston (26) comportant des sections opposées différenciées, qui toutes deux sont soumises essentiellement à la pression d'alimentation du GPL ; un élément auxiliaire d'ouverture/fermeture (39) qui est normalement maintenu, par des moyens élastiques (41), dans une position de fermeture d'un trou pilote (30) ; et un électroaimant (19) pour déplacer l'élément auxiliaire d'ouverture/fermeture (39) pour l'amener dans une position d'ouverture dudit trou pilote (30), dans laquelle se produit une évacuation d'une chambre tournée vers ledit piston (26), de manière à permettre le déplacement du piston en direction de la position d'ouverture dudit élément principal d'ouverture/fermeture (23).

2. Soupape électromagnétique selon la revendication 1, **caractérisée en ce que** ledit piston (26) est traversé par un passage axial (34) dans lequel est installée une soupape antiretour (35) qui empêche un écoulement du GPL en direction de l'entrée de la soupape.

3. Système pour commander le remplissage d'un réservoir de véhicule automobile avec du GPL, comprenant un réservoir (1) pour le GPL, comportant une embouchure d'entrée pour l'introduction du GPL ;
- **caractérisé en ce que** ledit système comprend une soupape (12) selon la revendication 1, qui commande la communication au moyen de ladite embouchure d'entrée ; ledit système comprenant en outre :
- des moyens formant capteur (9) pour détecter le niveau du GPL dans le réservoir ; et
- des moyens pour commander la fermeture de ladite soupape (12) lorsque les moyens formant capteur (9) indiquent qu'un niveau maximum prédéterminé du GPL dans le réservoir a été atteint, et
- dans lequel :
- ladite soupape (12) est une soupape normalement fermée, qui peut être actionnée dans le sens de l'ouverture par excitation dudit électroaimant (19) ;
- lesdits moyens formant capteur (9) sont pré-agencés pour émettre un premier signal électrique lorsque ledit niveau maximum prédéterminé du GPL dans le réservoir est atteint ;
- le système comprend en outre :
- un élément de commande (16), qui peut être actionné manuellement, pour la production d'un second signal électrique indiquant l'intention de procéder au remplissage du réservoir (1) ; et
- un circuit de commande (18), qui est indépendant du circuit à bord du véhicule automobile (c'est-à-dire un circuit autonome) de manière à être actif même lorsque le moteur du véhicule est arrêté, ledit circuit autonome étant pré-agencé de manière à recevoir ledit premier signal et ledit second signal, et connecté à l'électroaimant (19) de ladite soupape (12) de manière à :
- exciter l'électroaimant (19) de la soupape pour commander son ouverture, lorsque ledit circuit reçoit ledit second signal indiquant l'activation de la modalité d'alimentation et jusqu'à ce que ledit premier signal indiquant que le niveau maximum prédéterminé de GPL dans le réservoir a été atteint, soit reçu ; et
- désexciter ledit électroaimant (19) pour commander la fermeture de la soupape (12) lorsque ledit premier signal indiquant que le niveau maximum prédéterminé de GPL dans le réservoir a été atteint, est reçu.

4. Système selon la revendication 3, **caractérisé en ce que** lesdits moyens formant capteur sont constitués par un capteur électrique activé magnétiquement, disposé sur une structure de support (7), qui est fixée par rapport à la structure du réservoir et coopère avec au moins un aimant permanent fixé par un corps flottant (8) guidé par rapport à ladite structure fixe (7).

5. Système selon la revendication 4, **caractérisé en ce que** ledit capteur est un relais à lame (9), disposé à l'extrémité d'une série de relais pré-agencés sur une seule et même structure de support (7) et coopérant avec ledit aimant permanent dudit corps flottant (8) pour délivrer une indication du niveau du GPL dans le réservoir.

6. Système selon la revendication 3, **caractérisé en ce que** ledit élément de commande (16) actionné manuellement est un élément de sélection, prévu sur le tableau de bord à bord du véhicule automobile et qui permet la sélection du mode de remplissage du véhicule avec du GPL.

7. Système selon la revendication 3, **caractérisé en ce que** le circuit de commande est intégré dans la structure de ladite soupape (12).
